# EUROPEAN PATENT SPECIFICATION

(11) **EP 4 340 200 B1**
(45) Date of publication and mention of the grant of the patent: **28.10.2026**
(21) Application number: 22195758.2
(22) Date of filing: 15.09.2022
(51) Int. Cl.: H02M 1/42, H02M 1/12, H02M 1/44, H05B 45/36, H05B 45/3725, H05B 45/355

(54) **PFC CIRCUITRY WITH PREDICTIVE ACTIVE EMI FILTERAND METOD FOR OPERATING THE PFC**
PFC-SCHALTUNG MIT PRÄDIKTIVEM AKTIVEM EMI-FILTER UND VERFAHREN ZUM BETRIEB DES PFC
CIRCUIT CFP AVEC FILTRE IEM ACTIF PRÉDICTIF ET PROCÉDÉ DE FONCTIONNEMENT DU PFC

(43) Date of publication of application: 20.03.2024
(73) Proprietor: Tridonic GmbH & Co. KG, 6851 Dornbirn (AT)
(72) Inventor: Kathan, David, 6850 Dornbirn (AT)
(74) Representative: Rupp, Christian

(56) References cited:
- EP-A2- 2 341 605
- WO-A1-2015/149096
- CN-A- 110 112 904
- US-A1- 2005 168 198
- US-A1- 2012 069 611
- US-A1- 2012 133 285
- US-A1- 2014 063 872
- US-A1- 2020 099 288
- US-A1- 2020 389 087
- US-A1- 2021 018 948
- SC M ANDREAS ET AL: "Active Cancellation of Electromagnetic Emissions of Power Electronic Systems by Injecting Synthesized and Synchronized Signals", 30 June 2020 (2020-06-30), XP093001923, Retrieved from the Internet <URL:https://eldorado.tu-dortmund.de/bitstream/2003/39212/1/Dissertation_Bendicks.pdf> [retrieved on 20221124]

## Description

The invention is generally in the area of AC-DC converter for driving LED lighting means.

The invention is especially in the field of boost Power Factor Correction, PFC, AC-DC converter for LED lighting means having an active Electro-Magnetic Interference, EMI, filter (AEF).

Actively switched PFC circuitries are generally known in the prior art. They typically comprise an inductor and a cyclically operated switch designed such that the current through the inductor raises during switching on time periods of the switch and falls during switching off time periods of said switch. The switching off levels are set such that the envelope of the triangular current flow through the inductor approximatively forms a sine wave such that the power consumption drawn by this circuitry follows a sine wave of a supplying AC mains voltage.

Furthermore, it is known to use EMI filters upfront of such PFCs. In the past, so called active EMI filters have been developed.

Marwan Ali, Eric Laboure, and Francois Costa, "Integrated Active Filter for Differential-Mode Noise Suppression", In: IEEE Transactions on Power Electronics 29.3 (Mar. 2014), pp. 1053-1057, ISSN: 0885-8993, 1941-0107, DOI: 10.1109/TPEL.2013.2276396, URL: http://ieeexplore.ieee.org/document/6576305/ discloses integrated active filter for differential-mode noise suppression. The present invention preferably relates to the differential mode noise suppression.

Andreas Bendicks, Axel Peters, and Stephan Frei, "FPGA-Based Active Cancellation of the EMI of a Boost Power Factor Correction (PFC) by Injecting Modulated Sine Waves", In: IEEE Letters on Electromagnetic Compatibility Practice and Applications 3.1 (Mar. 2021), pp. 11-14, ISSN: 2637-6423, DOI: 10.1109/LEMCPA.2020.3030838, URL: https://ieeexplore.ieee.org/document/9222238 teaches active cancellation of the EMI of a boost power factor correction (PFC) by injecting modulated sine waves.

Wenjie Chen et al, "An Experimental Study of Common- and Differential-Mode Active EMI Filter Compensation Characteristics", In: IEEE Transactions on Electromagnetic Compatibility 51.3 (Aug. 2009), pp. 683-691, ISSN: 0018-9375, DOI:
10.1109/TEMC.20092021258, URL: http://ieeexplore.ieee.org/document/5062294 discloses an experiment al study of common- and differential-mode active EMI filter compensation characteristics. The present invention relates preferably to the Differential-Mode Active EMI Filter Compensation.

US 2014/063872 A1 discloses a PFC circuitry with EMI filter performing noise sensing at the AC input port.

Sc M Andreas ET AL: "Active Cancellation of Electromagnetic Emissions of Power Electronic Systems by Injecting Synthesized and Synchronized Signals", 30 June 2020, XP093001923, DOI: 10.17877/DE290R-21129 discloses, in fig. 9.10 on page 125, a method for the active cancellation of predictable EMI by injecting synthesized and synchronized signals.

All of these proposed solutions rely on a noise sensing. As the biggest part of the EMI noise is produced by the current through the inductor of the PFC, typically, the current through or the voltage across the inductor is sensed in the noise-sensing step. This sensing step obviously leads to a certain delay in the EMI compensation because of its reactive nature. Furthermore, the noise-sensing stage of the active EMI requires additional components.

Therefore, it is generally the object of the present invention to improve an active EMI filter for a PFC.

This object is achieved by means of the features of the independent claims. The dependent claims develop further the central idea of the invention.

A first aspect of the invention proposes a PFC circuitry with EMI filter, comprising:
- A PFC switch having a switch and an inductor,
- A control unit controlling, preferably feedback-controlling, the switch via a switch control signal, and
- An active EMI filter, arranged between AC supply terminals and the PFC circuitry and having a compensation current unit injecting a compensation current into the current flowing through the inductor,
wherein the active EMI filter unit further comprises a compensation current calculation unit setting the current of the compensation current unit based on the characteristics, such as e.g. duty cycle and/or frequency, of the switch control signal.

In addition, the EMI filter unit further comprises a compensation current calculation unit setting the current of the compensation current unit in a predictive manner without noise sensing, e.g. via sensing the PFC inductor current.

Furthermore, the compensation current calculation unit setting calculates the inductor current based on the switch control signal, and sets the compensation current signal based on the calculated inductor current using an EMI noise model of the PFC circuitry.

The predictive active EMI filter of the invention can be applied to any switched converter topology (AC-DC as well as DC-DC), if the following conditions are met:
- the switch control signal of the converter is known, and
- the (preferably ) DM noise model is present.

The EMI noise model models the differential mode noise, i.e. the noise flow over the supply path of the PFC circuitry.

The PFC may be a boost PFC preferably in boundary conduction mode.

The circuitry may furthermore comprise a passive EMI circuitry, thus forming a hybrid EMI filtering circuit for improving the EMI suppression over the whole bandwidth of the EMI noise. Preferably, the AEF is designed to surpress the lower frequencies and the passive EMI suppresses the higher frequencies.

The compensation current calculation unit setting may be supplied with the switch control signal.

The compensation current calculation unit and the control unit may be integrated in one integrated circuitry, preferably an ASIC.

A further aspect of the invention proposes a LED driver having a circuitry according to any of the preceding claims.

A yet further aspect of the invention proposes a method for operating a PFC circuitry with EMI filter, comprising:
- A PFC switch having a switch and an inductor,
- A control unit controlling the switch via a switch control signal, and
- An active EMI filter, arranged between AC supply terminals and the PFC circuitry and injecting a compensation current into the current flowing through the inductor,
the method comprising the further step of:
- setting the current of the compensation current unit based on characteristics, such as e.g. duty cycle and/or frequency, of the switch control signal
- setting the current of the compensation current unit in a predictive manner without noise sensing, e.g. via sensing the PFC inductor current, and
- setting the compensation current signal based on the calculated inductor current using an EMI noise model of the PFC circuitry.

Further features, advantages and embodiments of the invention will now be explained with reference to the enclosed figures:
- Figure 1: shows generally a known PFC, and
- Figure 2: shows a block diagram of an active EMI filter (AEF) according to the invention.

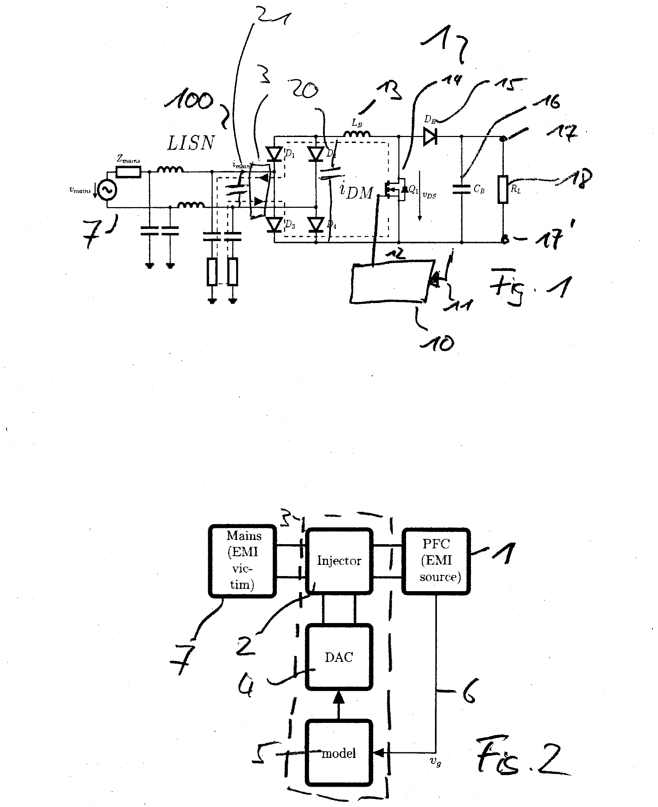

As it can be seen in Fig. 1, a PFC, for example a boost PFC of an AC-DC converter is supplied with mains voltage 7. The mains voltage 7 is rectified via diodes D1....D4. The shown PFC of Fig. 1 uses a passive EMI filter 100, which is, according to the invention, replaced by or complemented with an active EMI filter 3 as shown in Fig. 2.

The passive filter 100 may comprise capacitors 20, 21 arranged before or after the rectifier stage D1...D4.

The AEF 3 is preferably arranged between the rectifier stage D1...D4 and the mains voltage input terminals 7.

LISN designates a line impedance stabilization network. iDM designates the DM noise current following the path shown in a broken line. The source of the noise is the switch 14.

The PFC of Fig. 1 furthermore comprises a boost inductor 13, a diode 15 preventing a reverse current flow, a capacitor 16 smoothening the voltage ripple, and output terminals 17. The load 18, preferably an LED-based load, is connected across these output terminals 17, 17'.

A control unit 10 is provided to actively control the switching operation of a switch 14 arranged to cyclically charge/discharge the boost inductor 13.

Typically, the PFC is operated in a feedback control mode, such that a feedback signal 11, which may represent the voltage across or the current through the boost inductor 13, is fed back to the control unit 10. In case of a BCM (boundary conduction mode, also sometimes called "critical conduction mode" CCM), operation of the PFC via the feedback signal 11, the control unit 10 switches off the switch 14 as soon as the current through the boost inductor 13 has reached a given preset level, allowing the current through the boost inductor 13 to drop. As soon as the current through the boost inductor 13 reaches or crosses the zero level, the control unit 10 switches the switch 14 conductive again in order to achieve a BCM mode operation.

The passive EMI filter 100 of the embodiment of Fig. 1 is, according to the invention, replaced by an active EMI filter (3 in Fig. 2). As shown in Fig. 2, the mains supply 7 is considered an EMI victim and the PFC circuitry 1 an EMI source. As already said before, the current through the inductor 13 is considered being the main contribution to the EMI source of the PFC 1.

As it is generally known in the field of AEFs, a current injector 2 is used, which injects a current with opposite phase to the noise produced by the PFC.

According to the invention, there is no noise-sensing stage for sensing the PFC EMI noise. Thus, there is especially no stage for sensing the current through or the voltage across the boost inductor 13 for the purposes of the EMI suppression or reduction. According to the invention, the noise can be predicted ahead of time, e.g. using an analytical model, and the antiphase compensation current can be injected simultaneously with the noise.

Generally, the prior art approach with reactive nature (noise sensing and then cancellation) is replaced by a predictive approach. The noise-sensing stage of known AEFs is replaced by a noise-prediction stage modeling the noise based on an input signal which is not sensing inductor current.

The predictive active EMI filter of the invention can be applied to any switched converter topology (AC-DC as well as DC-DC), if the following conditions are met:
- the switch control signal of the converter is known, and
- the (preferably ) DM noise model is present.

To this regard, the invention proposes to use information as to the operation of the PFC switch 14, designated V_{G} in Fig. 2, to feed a model, which produces, as its output, the boost inductor current as a main source for the PFC EMI noise. Based on this modeled boost inductor current, the EMI noise is modeled and a phase-inversed compensation value is produced at the output of the model 5. This output has a digital value and is fed to a digital analog converter 4, which sets the compensation current, which the compensation current injector 2 will add on to the boost inductor current 13.

Typically, the compensation current injector 2 is arranged between the mains supply 7 and the PFC 1, and especially between the mains supply 7 and the boost inductor 13 of the PFC 1.

According to one approach, for example the gate signal of a MOSFET as PFC switch 14 is tapped off and fed to the active EMI filter 3, especially as input to the PFC noise model 5.

This approach is especially useful in case the AEF unit 3 is a separate unit to the control unit 10 of the PFC 1.

However, the AEF 3 may be integrated in the control unit 10, which may be implemented for example as an ASIC, a microcontroller or a hybrid version thereof.

As the control unit 10 computes the timing information for the PFC switch 14, typically based on a feedback control algorithm, the timing information is then already available in this integrated circuit combining the AEF and the PFC control.

Thus, the invention proposes a predictive active EMI filter for an actively switched PFC 13.

The model 5 of the AEF 3 may be an analytical model. It may also be an artificial intelligence unit, for example a trained neural network trained to output compensation current information depending on the characteristics, especially timing characteristics such as duty cycle of frequency of the switch control signal fed from the control unit 10 to the PFC switch 14.

The active EMI filter 3 may be adaptive, such that for example during manufacturing of an LED driver comprising the AEF 3 and the PFC 1 according to the invention, the produced EMI noise is measured using known EMI measurement devices. The parameters of the model 5 can then be adapted until the measured EMI noise level is beyond a given threshold. In the true operation of the driver comprising such AEF and PFC, no measurement is required.

## Claims

1. A Power Factor Correction, PFC, circuitry with Electro-Magnetic Interference, EMI, filter (3, 100), comprising:
- A PFC (1) having a switch (14) and an inductor (13),
- A control unit (10) controlling, preferably feedback-controlling, the switch via a switch control signal, and
- An active EMI filter (3), arranged between AC supply terminals (7) and the PFC (1) and having a compensation current unit (2) injecting a compensation current into the current flowing through the inductor (13),
wherein the active EMI filter (3) further comprises a compensation current calculation unit (5)
**characterized in that**
the compensation current calculation unit (5) sets the current of the compensation current unit (2) based on the characteristics, such as for example duty cycle and/or frequency, of the switch control signal (6),
wherein the compensation current calculation unit (5) setting the current of the compensation current unit (2) in a predictive manner without noise sensing, an example of noise sensing being sensing the PFC inductor current, and
wherein the compensation current calculation unit (5) setting sets the compensation current signal based on the calculated inductor current using an EMI noise model of the PFC circuitry.

2. The circuitry of claim 1,
wherein the EMI noise model models the differential mode noise, i.e. the noise flow over the supply path of the PFC (1).

3. The circuitry of any of the preceding claims, wherein the PFC is a boost PFC (1) preferably in boundary conduction mode.

4. The circuitry of any of the preceding claims, furthermore comprising a passive EMI circuitry.

5. The circuitry of any of the preceding claims, wherein the compensation current calculation unit setting (5) is supplied with the switch control signal from the control unit.

6. The circuitry of any of claims 1 to 5,
wherein the compensation current calculation unit and the control unit are integrated in one integrated circuitry, preferably an ASIC.

7. The circuitry of any of claims 1 to 6,
comprising a rectifier stage (D1...D4), the active EMI filter being arranged between the rectifier stage (D1...D4) and mains voltage input terminals (7) of the circuitry.

8. A LED driver having a circuitry according to any of the preceding claims.

9. A LED module having a driver according to claim 8 and LED lighting means (18) supplied by the driver.

10. A method for operating a PFC (1) with EMI filter (3., 100), comprising:
- A PFC (1) having a switch (14) and an inductor (13) ,
- A control unit (10) controlling the switch (14) via a switch control signal, and
- An active EMI filter (3), arranged between AC supply terminals (7) and the PFC (19) and injecting (2) a compensation current into the current flowing through the inductor (13),
**characterized in that** the method further comprises the further steps of:
- setting (5) the current of the compensation current unit based on characteristics, such as for example duty cycle and/or frequency, of the switch control signal (6),
- setting the current of the compensation current unit (2) in a predictive manner without noise sensing, an example of noise sensing being sensing the PFC inductor current, and
- setting the compensation current signal based on the calculated inductor current using an EMI noise model of the PFC circuitry.

## Patentansprüche

1. Leistungsfaktorkorrektur-(PFC)-Schaltungsanordnung mit einem Filter (3, 100) für elektromagnetische Interferenz (EMI), umfassend:
- einen PFC (1) mit einem Schalter (14) und einer Induktivität (13),
- eine Steuereinheit (10), die den Schalter über ein Schaltersteuersignal steuert, vorzugsweise rückkopplungsgesteuert steuert, und
- einen aktiven EMI-Filter (3), der zwischen AC-Versorgungsanschlüssen (7) und der PFC (1) angeordnet ist und eine Kompensationsstromeinheit (2) aufweist, die einen Kompensationsstrom in den durch die Induktivität (13) fließenden Strom einspritzt,
wobei der aktive EMI-Filter (3) ferner eine Kompensationsstrom-Berechnungseinheit (5) umfasst,
**dadurch gekennzeichnet, dass**
die Kompensationsstrom-Berechnungseinheit (5) den Strom der Kompensationsstromeinheit (2) basierend auf den Eigenschaften, wie zum Beispiel dem Tastverhältnis und/oder der Frequenz, des Schaltersteuersignals (6) einstellt,
wobei die Kompensationsstrom-Berechnungseinheit (5) den Strom der Kompensationsstromeinheit (2) auf prädiktive Weise ohne Rauscherfassung einstellt, wobei ein Beispiel für eine Rauscherfassung das Erfassen des PFC-Induktivitätsstroms ist, und
wobei die Kompensationsstrom-Berechnungseinheit (5) bei ihrem Einstellen das Kompensationsstromsignal basierend auf dem berechneten Induktivitätsstrom unter Verwendung eines EMI-Rauschmodells der PFC-Schaltungsanordnung einstellt.

2. Schaltungsanordnung nach Anspruch 1,
wobei das EMI-Rauschmodell das Differenzmodusrauschen modelliert, d. h. den Rauschfluss über den Versorgungspfad der PFC (1).

3. Schaltungsanordnung nach einem der vorhergehenden Ansprüche, wobei die PFC eine Boost-PFC (1), vorzugsweise in einem Grenzleitungsmodus, ist.

4. Schaltungsanordnung nach einem der vorhergehenden Ansprüche, ferner umfassend eine passive EMI-Schaltungsanordnung.

5. Schaltungsanordnung nach einem der vorhergehenden Ansprüche, wobei die Einstellung der Kompensationsstrom-Berechnungseinheit (5) mit dem Schaltersteuersignal von der Steuereinheit versorgt wird.

6. Schaltungsanordnung nach einem der Ansprüche 1 bis 5,
wobei die Kompensationsstrom-Berechnungseinheit und die Steuereinheit in einer integrierten Schaltungsanordnung integriert sind, vorzugsweise einem ASIC.

7. Schaltungsanordnung nach einem der Ansprüche 1 bis 6,
umfassend eine Gleichrichterstufe (D1 ... D4), wobei der aktive EMI-Filter zwischen der Gleichrichterstufe (D1 ... D4) und Netzspannungseingangsanschlüssen (7) der Schaltungsanordnung angeordnet ist.

8. LED-Treiber mit einer Schaltungsanordnung nach einem der vorhergehenden Ansprüche.

9. LED-Modul mit einem Treiber nach Anspruch 8 und LED-Leuchtmitteln (18), die durch den Treiber versorgt werden.

10. Verfahren zum Betreiben einer PFC (1) mit EMI-Filter (3., 100), umfassend:
- einen PFC (1) mit einem Schalter (14) und einer Induktivität (13),
- eine Steuereinheit (10), die den Schalter (14) über ein Schaltersteuersignal steuert, und
- einen aktiven EMI-Filter (3), der zwischen AC-Versorgungsanschlüssen (7) und der PFC (19) angeordnet ist und (2) einen Kompensationsstrom in den durch die Induktivität (13) fließenden Strom einspritzt,
**dadurch gekennzeichnet, dass** das Verfahren ferner die folgenden weiteren Schritte umfasst:
- Einstellen (5) des Stroms der Kompensationsstromeinheit basierend auf Eigenschaften, wie zum Beispiel dem Tastverhältnis und/oder der Frequenz, des Schaltersteuersignals (6),
- Einstellen des Stroms der Kompensationsstromeinheit (2) auf prädiktive Weise ohne Rauscherfassung, wobei ein Beispiel für eine Rauscherfassung das Erfassen des PFC-Induktivitätsstroms ist, und
- Einstellen des Kompensationsstromsignals basierend auf dem berechneten Induktivitätsstrom unter Verwendung eines EMI-Rauschmodells der PFC-Schaltungsanordnung.

## Revendications

1. Circuiterie de correction du facteur de puissance (PFC) avec un filtre (3, 100) d'interférences électromagnétiques (EMI), comprenant :
- une PFC (1) comportant un interrupteur (14) et une inductance (13),
- une unité de commande (10) commandant, de préférence par rétroaction, l'interrupteur au moyen d'un signal de commande de l'interrupteur, et
- un filtre EMI actif (3), agencé entre des bornes d'alimentation CA (7) et la PFC (1) et comportant une unité de courant de compensation (2) injectant un courant de compensation dans le courant circulant à travers l'inductance (13),
dans laquelle le filtre EMI actif (3) comprend en outre une unité de calcul du courant de compensation (5),
**caractérisée en ce que**
l'unité de calcul du courant de compensation (5) règle le courant de l'unité de courant de compensation (2) sur la base des caractéristiques, telles que par exemple le rapport cyclique et/ou la fréquence, du signal de commande de l'interrupteur (6),
dans laquelle l'unité de calcul du courant de compensation (5) règle le courant de l'unité de courant de compensation (2) de manière prédictive sans détection de bruit, un exemple de détection de bruit étant la détection du courant d'inductance PFC, et
dans laquelle l'unité de calcul du courant de compensation (5), lors de son réglage, règle le signal de courant de compensation sur la base du courant d'inductance calculé en utilisant un modèle de bruit EMI de la circuiterie PFC.

2. Circuiterie selon la revendication 1,
dans laquelle le modèle de bruit EMI modélise le bruit de mode différentiel, c'est-à-dire l'écoulement du bruit via le trajet d'alimentation de la PFC (1).

3. Circuiterie selon l'une quelconque des revendications précédentes, dans laquelle la PFC est une PFC élévatrice (1), de préférence dans un mode de conduction limite.

4. Circuiterie selon l'une quelconque des revendications précédentes, comprenant en outre une circuiterie EMI passive.

5. Circuiterie selon l'une quelconque des revendications précédentes, dans laquelle le réglage de l'unité de calcul du courant de compensation (5) est alimenté par le signal de commande de l'interrupteur provenant de l'unité de commande.

6. Circuiterie selon l'une quelconque des revendications 1 à 5,
dans laquelle l'unité de calcul du courant de compensation et l'unité de commande sont intégrées dans une circuiterie intégrée unique, de préférence un ASIC.

7. Circuiterie selon l'une quelconque des revendications 1 à 6,
comprenant un étage de redressement (D1 ... D4), le filtre EMI actif étant agencé entre l'étage de redressement (D1 ... D4) et des bornes d'entrée de tension secteur (7) de la circuiterie.

8. Pilote de LED comportant une circuiterie selon l'une quelconque des revendications précédentes.

9. Module de LED comportant un pilote selon la revendication 8 et des moyens d'éclairage à LED (18) alimentés par le pilote.

10. Procédé de fonctionnement d'une PFC (1) avec un filtre EMI (3., 100), comprenant :
- une PFC (1) comportant un interrupteur (14) et une inductance (13),
- une unité de commande (10) commandant l'interrupteur (14) au moyen d'un signal de commande de l'interrupteur, et
- un filtre EMI actif (3), agencé entre des bornes d'alimentation CA (7) et la PFC (19) et injectant (2) un courant de compensation dans le courant circulant à travers l'inductance (13),
**caractérisé en ce que** le procédé comprend en outre les étapes supplémentaires suivantes consistant à :
- régler (5) le courant de l'unité de courant de compensation sur la base de caractéristiques, telles que par exemple le rapport cyclique et/ou la fréquence, du signal de commande de l'interrupteur (6),
- régler le courant de l'unité de courant de compensation (2) de manière prédictive sans détection de bruit, un exemple de détection de bruit étant la détection du courant d'inductance PFC, et
- régler le signal de courant de compensation sur la base du courant d'inductance calculé en utilisant un modèle de bruit EMI de la circuiterie PFC.
